# EUROPEAN PATENT SPECIFICATION

(11) **EP 2 917 430 B1**
(45) Date of publication and mention of the grant of the patent: **02.07.2025**
(21) Application number: 13854033.1
(22) Date of filing: 08.11.2013
(51) Int. Cl.: F24S 25/61, E04D 13/18, F24S 25/00, F24S 25/33, F24S 25/65

(54) **BUILDING STRUCTURE HAVING A ROOF ON WHICH EQUIPMENT CAN BE MOUNTED**
GEBÄUDESTRUKTUR MIT EINEM DACH, AUF DEM AUSRÜSTUNG MONTIERT WERDEN KANN
STRUCTURE DE BÂTIMENT COMPORTANT UN TOIT SUR LEQUEL UN ÉQUIPEMENT PEUT ÊTRE MONTÉ

(30) Priority: 08.11.2012 US 201261723786 P; 11.03.2013 US 201361775700 P
(43) Date of publication of application: 16.09.2015
(73) Proprietor: Cameron, D. Kevin, Sunnyvale, California 94086 (US)
(72) Inventor: Cameron, D. Kevin, Sunnyvale, California 94086 (US)
(74) Representative: Derry, Paul Stefan
(86) International application number: PCT/US2013/069351
(87) International publication number: WO 2014/074956

(56) References cited:
- EP-A1- 1 035 591
- WO-A1-2011/132735
- WO-A2-96/18857
- JP-A- 2001 081 916
- JP-A- 2008 231 666
- JP-A- 2008 231 666
- JP-A- H03 124 069
- JP-B2- 2 760 599
- JP-B2- 2 760 599
- US-A- 1 028 725
- US-A1- 2010 170 163
- US-A1- 2012 144 763
- US-A1- 2012 144 763

## Description

### FIELD OF TECHNOLOGY

This disclosure relates generally to the technical field of installation of equipment on a roof, and the invention relates to a building structure having a roof on which equipment can be mounted and to a method of installing a support structure for mounting one or more panels on a roof of a building structure.

### BACKGROUND

In the early development of the solar photovoltaic (PV) industry, the dominant cost component of a system was the PV cells. Over time, the cost of PV cells dropped substantially. As a result, the "balance of system" costs are now a large portion of the cost of buying and installing a solar system. The "balance of system" costs include the use of skilled and the cost of other hardware.

Since housing is a durable good with a long lifetime, a PV solar system can be utilized on a given roof installation for a substantial amount of time. Residential roofs are a good target market, as opposed to commercial rooftops, because residential roofs typically have a substantial unused space. Tile roofs are particularly difficult to retrofit with solar PV because drilling holes in tile is difficult and can result in breakage of the tile.

Existing approaches also tend to damage the integrity of the roofs on which they are installed by requiring supports and wiring conduit to pass through the main section of the roof. In addition, existing installation techniques are not designed for serviceability of the PV system or the roof. Many solar installations utilize standoffs that attach to a housing structure by using fasteners that pierce the roof shingles. Flashing and caulk is used to reduce leakage around these breaches in the roof. However, any hole made in the face of a roof, between the apex of the roof down to the lip of the roof by the fascia, which area is over living quarters, reduces the lifespan of the roof and is apt to cause leakage and integrity problems much sooner than if the roof was not breached. For the PV system to be replaced for an upgrade or repair, skilled labor is required to disconnect the high-voltage electrical wiring of the PV system. Moreover, the disassembly of the PV system is time-consuming and painstaking because of the number of standoffs fastened to the building structure and because of the many rails, brackets, and fasteners used to retain the PV solar panels.

WO2011/132735 discloses a method for attaching and fixing a trestle (10) which supports an energy conversion device (200) on a roof (110) of a building (100) having eave plates (150). The method comprises an arrangement step and a fixing step. In the arrangement step, the trestle (10), which is formed by linking two grid-shaped structural members (30) by means of a roof top ridge metal fitting (20), is arranged on the roof (110). In the fixing step, metal fittings (80) fixed to the eave plates (150) are linked and fixed to the trestle (10) by means of wires (90). The roof top ridge metal fitting (20) has a predetermined shape so that after the trestle (10) is arranged on the roof (110), the roof top ridge metal fitting (20) can link the grid-shaped structural members (30) in a state where the roof top ridge metal fitting (20) is spaced apart from the roof top ridge (120).

WO 96/18857 A2 discloses a building structure having a roof on which equipment can be mounted, the building structure comprising a support structure for mounting equipment on the roof.

### SUMMARY

The claims define the matter for protection. Disclosed in the specification is an apparatus, system, and method of installation for a support structure of roof mounted equipment, specifically solar panels, on a pitched roof. Modules are prefabricated, then lowered onto a roof using a single hole or access point in the roof to connect the module to the building structure, and to couple wiring to electrical loads, either in the house or on the module or to a grid. A hole is utilized at the apex of the roof where the structural impact is minimal and potential damage from any leaks is minimized. The part of the module that drops into the roof space contains the power electronics. The entry hole in the apex is sealed and protected such that water will not penetrate to it. A clamping structure is attached to the part of the frame in the roof space, which either clamps it to the roofing material or to the roof supports. A module may have any number of any size panels, focusing on a cost effective size for transportation and for fitting popular sizes of roof (from the apex to the gutter). On a wide roof, multiple independent units may be installed.

Standoffs are attached to the framing to keep it the desired distance from the roof surface, but do not attach to the roof. Standoffs are made from flexible material to absorb variations in roof materials. The power electronics that converts the unregulated panel power to usable regulated power is attached between the main support pieces in the roof space, since this is beneath the roof, typically in an interior building space such as an attic, which is protected from the elements, and results in a cheaper interior-grade housing (vs. a NEMA 4 rated exterior box). The power electronics housing includes a large (extruded) aluminum heat sink that is multi-functionally coupled between the framing uprights for rigidity. After being lowered into place a "clamp beam" is attached to the framing on either or both sides of the framing to attach it to the roof.

Framing components can use steel or aluminum in cross-sections of an L-bar, T-bar, and square or round tube. Standoffs and panel clamps may be made of metal or non-conductive materials, and may be threaded onto the framing and glued/welded rather than using bolts.

Typical roofing structure is composite shingle over plywood and wood rafters, to which the ends of the clamp beam can be attached (if required). If the roof is tile on top of a wood frame (or similar), the clamp beam is attached to the rafters (if flat) or around them (if shaped to do so). The framing and clamp have a bolthole pattern such that it can accommodate different thicknesses of roof, and thus allow secure attachment with only one bolt per clamp beam (attachment of ends being optional). Since roof rafter spacing is normally a fixed size, the spacing between the framing members can be set such that the clamp beams are close to the rafters on both sides for more secure attachment. To save material or fit tighter spaces the clamp beam may be constructed such that it only extends in one direction. The clamp may also include flanges to stop it twisting vs. the frame. Where the roof rafter spacing is significantly larger than the framing width and a single clamp is insufficient, alternative clamp configurations with a longer reach are used. In building structures using a (structural) beam along the apex of the roof, the vertical part of the framing can pass beside it and the weatherproofing plate(s) would be offset as required.

As an alternative or in addition to clamping, a "battery basket" may be hung from the internal end of the framing that will act as ballast as well as providing safe housing for batteries for storing the solar power.

While a single pitch of PV, e.g., facing south on a building, is expected to be the common configuration, another embodiment accommodates multiple different pitches is also envisaged, e.g., where the pitches face east and west on the building and receive similar amounts of sunlight over a day.

Since the structure and PV panels are preassembled, no external wiring/attachment is performed, and thus, the exterior parts of the equipment can be sealed against the elements prior to installation. This allows the use of materials like steel, rather than aluminum, which is cheaper and more weldable. Welding results in better electrical contact if the framing is used to transfer power.

If metal tubing is used for the uprights, (e.g. square pipe) it may double as conduit for wiring. In addition, it may serve as a place to plug in antenna brackets (see below), in which case simple end-caps may be used to seal the tubes that can be "popped" out so that additional framing can be added after initial installation. Note that the lower end of the tube would be exposed below the electronics so that water ingress through the tubes would not leak onto electronics.

Solar panels can be wired in various configurations, where wiring codes allow: the frame may be used as an electrode to reduce costs further. If the two framing members are electrically isolated then they may be used to carry all the power off the roof (one as the positive connection the other as the negative connection). The power electronics can use its mechanical attachment to the framing as its electrical contact, eliminating the need for special connectors. Otherwise, the PV cables will pass through the rain deflection plate via watertight grommet (or similar).

The minimum cost and maximum efficiency implementation uses the framing for power transfer from parallely coupled PV panels managed by maximum power-point tracking (MPPT) electronics on each panel so that the voltage going into the roof space is low (sub 50V is preferable for US wiring codes), and there is redundancy among the panels. Electrically insulative paint on framing parts is sufficient dielectric protection below 50V. In addition, MPPT tracking electronics can be designed to shut off power automatically when it senses an arc fault. Low voltage systems can also use parts designed for automotive systems that are cheaper due to their volume production.

Roof pitches are variable, but the prefabricated unit can be used over a wide range of angles because the load-bearing member extending into the roof space does not have to be vertical. The rain deflector plate, known also as the interface member, can be hinged at its apex to accommodate the different roof pitches, using a fastener hinge pin that can be tightened once the pieces are in place to hold the desired angle, with optional welding of the hinged interface member for security/connectivity. For a two-sided roof with mirror pitches, the same angle will be set for both halves of the interface member. For single pitch roofs that end at an exterior vertical wall, one half of the interface member would be rigidly attached to the panel framing, while the other half is attached to the building structure flexibly, using foam, Silicone sealants, and/or boots for weatherproofing. Another embodiment uses a dual-pitch hinge. Welding may also be used to achieve more reliable connectivity and structural integrity, either prior to shipment to a known roof pitch, or on-site prior to installation for an unknown roof pitch.

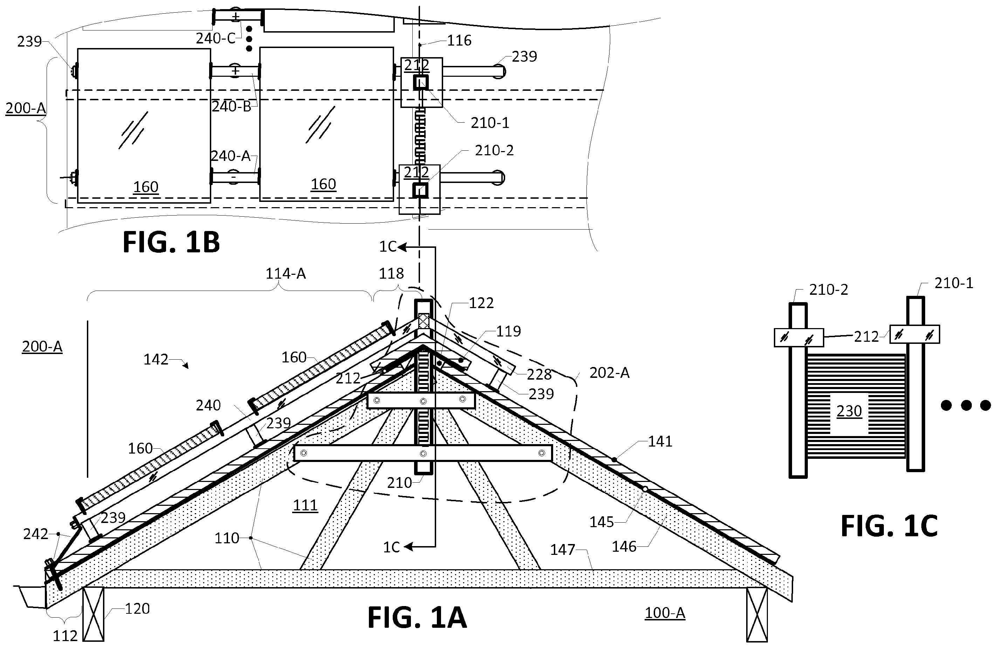

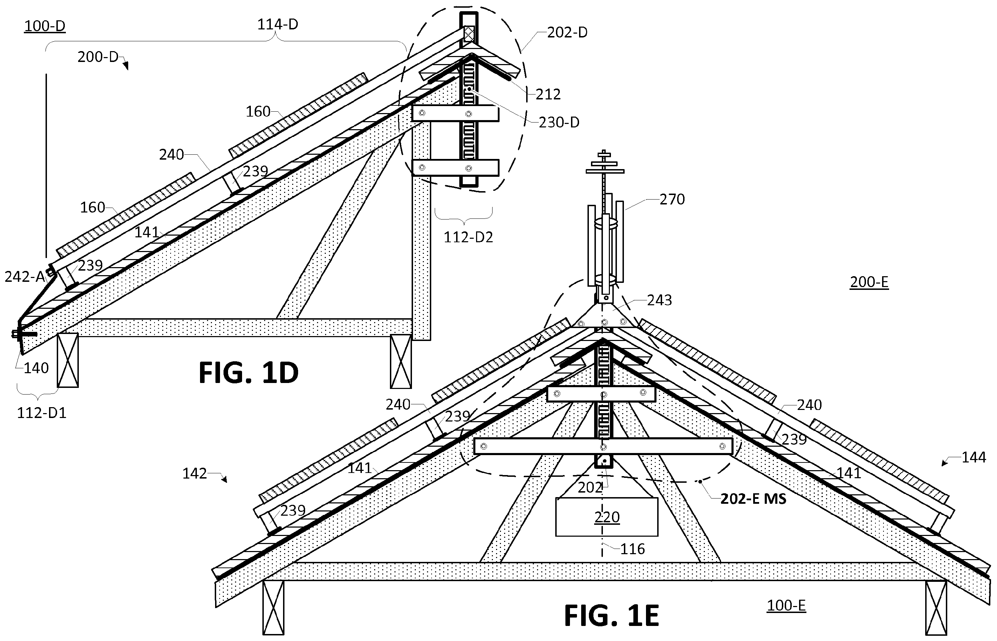

If an installation requires extra stability (under strong winds etc.), in examples not part of the present invention, the frame may be tied down using steel wire(s) from attachment points on the lower end of the frame to assemblies at the lower edge of the roof - at or around the gutter, where the main roof area's integrity will not be compromised if holes are drilled (i.e. any leaks caused will be beyond the walls). If the framing runs all the way from the apex to the lower edge of the roof by the gutter, the lower standoffs may be constructed such that they attach to the roof by screws or bolts. Attachment points on the framing used for hoisting the PV assembly onto the roof double as tie-down points - noting that the framing in figure 1 extends beyond the PV panels for that purpose.

The same equipment can be used on mono-pitch roofs or mid-pitch if the rain deflection plate is laid under the upper side shingle or tile.

Residential installation can be accomplished by one to two workers. One person would be on the roof to cut the hole and guide the unit, the second would operate a "cherry picker" to lift the units from a delivery truck to the roof. Hoops, or lift-brackets, can be welded to the framing to aid hoisting the unit. Once in place a technician can finish the installation from within the roof space. If the cherry picker in question can be operated by remote control, then a single person could perform the entire installation if also qualified for internal wiring. Removal of the frame and PV panel for servicing utilizes the reverse process, i.e. no in-place servicing of the PV panel and electronics is required. Instead, the unit is removed and replaced or upgraded.

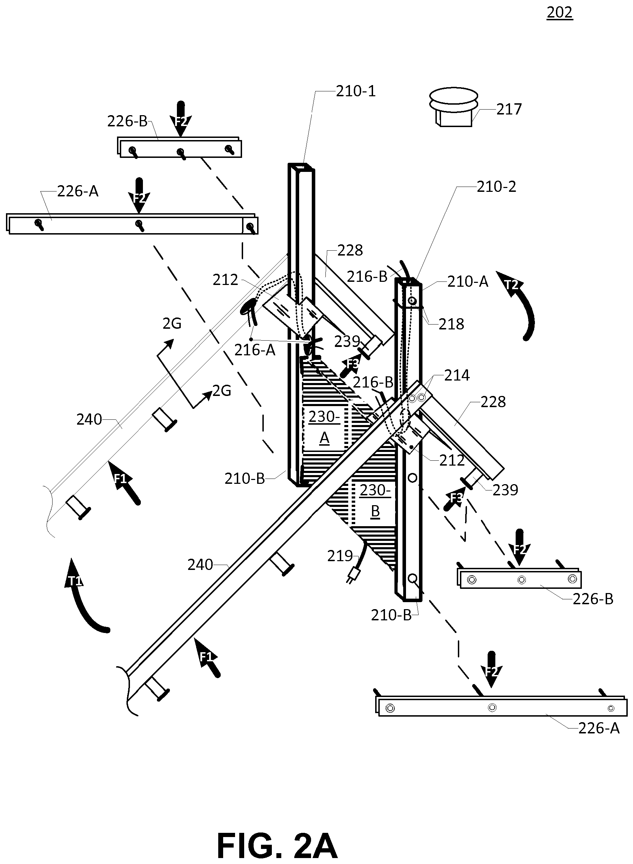

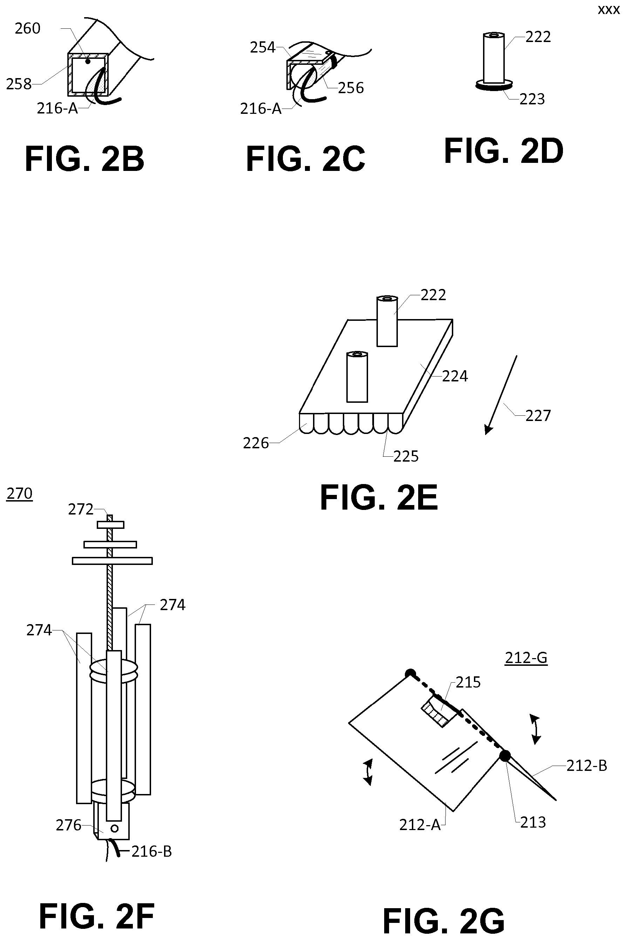

The PV panels can be sized such that on roofs where multiple units are installed, adjacent units have some small clearance, assuming a unit falls between alternate sets of rafters (for wider panels as shown in figure 2). The appearance from the ground is then similar to existing systems where panels are abutted (making maximum use of the roof space), but has the advantage that any single unit can be removed for service/replacement.

The standoff design will depend on the roof construction, but for clay/ceramic tiles plates with a foam or rubber that can adjust to the tiles are used so that there are no high pressure points that might cause fracture, and the weight is spread over a number of tiles. The foam/rubber is deeply ribbed so that water can drain through and not collect on the top side.

**In** simple installations, one would expect the output of the power electronics to be grid-tied AC power. Some additional redundancy can be achieved by wiring the DC side of the inverters in parallel between units so that on the failure of an inverter stage in any unit its power will be transferred to other units, thus avoiding complete loss of the unit. The DC bus created by doing this may be used directly for off-grid power.

Since this framing system is intended to sit at the highest point on a roof, it makes an excellent platform for antennas for line-of-sight networking, and since it is expected to be on a lot of roofs it is particularly suited to use with small cells and mesh networks in the 60-80GHz range, the availability of solar PV and battery backup power makes it extremely reliable. Electronics for relaying network traffic may be combined with the power electronics for the solar, bridging to networks that will work inside the residence or standard cell phone networks. In particular, this may be used with high bandwidth fiber-optic wiring like that used with a DC bus system to bridge gaps in fiber-optic distribution.

### BRIEF DESCRIPTION OF THE VIEW OF DRAWINGS

Example embodiments are illustrated by way of example and not limitation in the figures of the accompanying drawings, in which like references indicate similar elements and in which:
**Figures 1A-1C** are a front view, top view, and side view of a building structure having a preassembled support structure and solar panel unit, on one side of a two-sided roof, that pierces the roof only at the apex, not according to the present invention.
**Figures 1D** is a front view of an alternative single-slope roof architecture having a preassembled support structure and solar panel unit that pierces the roof only at the apex, not according to the present invention.
**Figures 1E** is a front view of a building structure having a preassembled support structure and solar panel unit, on both sides of a two-sided roof, which pierces the roof only at the apex, according to one or more embodiments.
**Figure 2A** is an oblique view of a preassembled framing system, with integrated electronics module and battery module, which is installable as a single unit on a roof, according to one or more embodiments.
**Figure 2B** is a cross-section of a square-tube rail for supporting a solar panel in the support structure and for providing a conduit enclosure for power and ground wires, according to one or more embodiments.
**Figure 2C** is an oblique view of an angle-iron rail for supporting a solar panel in the support structure, including a conduit enclosure for power and ground wires, according to one or more embodiments.
**Figure 2D** is a view of a standoff for a composite shingle roof, according to one or more embodiments.
**Figure 2E** is an oblique view of a standoff with a grooved silicon pad for a tile roof, according to one or more embodiments.
**Figure 2F** is an oblique view of a multiple transceiver attachment to the support structure, according to one or more embodiments.
**Figure 2G** is an oblique view of a hinged interface member, according to one or more embodiments.
**Figure 3A** is a top view of a cascaded PV panel assembly down an extended-height roof, according to one or more examples, not part of the present invention.
**Figure 3B** is a side view of a telescoping support rail system, according to one or more embodiments.
**Figure 3C** is a side view of a cable-tensioned telescoping support rail system, according to one or more embodiments.
**Figure 4** is a flowchart of a method to install and remove a modular PV support structure, according to one or more embodiments.

Other features of the present embodiments will be apparent from the accompanying drawings and from the detailed description that follows.

### DETAILED DESCRIPTION

An apparatus and system for a support structure (SS) and a method for mounting (solar) equipment and the support structure onto pitched roofs. In the following description, for the purposes of explanation, numerous specific details are set forth in order to provide a thorough understanding of the various embodiments. It will be evident, however to one skilled in the art that various embodiments may be practiced without these specific details.

Referring now to **Figures 1A-1C****,** a front view, top view, and side view of a building structure 100-A having a preassembled support structure and solar panel unit 200-A, also referred to as a pre-assembled module, on a first side 142 of a two-sided roof, that pierces the roof 141 only at the apex 116 is shown, not according to the present invention.

The support structure (SS) 200-A includes at least one support rail 240 for supporting the equipment, i.e., solar panels 160, coupled to one or more standoffs 239 for maintaining the equipment 160 at a distance away from a face 114-A of the roof 141. SS 200-A is preassembled off the roof for install on the roof 141 as a single unit. SS 200-A requires no fasteners to penetrate the face 114-A of the roof in order to retain the SS 200-A to the building structure 100-A. SS 200-A does penetrate the roof 141 of the building structure, but not on the face 114-A of the roof. Rather, SS 200-A penetrates the roof only at a region 118 covered by the ridge shingle 119 at apex 116 of the roof 141. The one or more standoffs 239 have no retention feature to couple them to the roof of the building structure, e.g., no fasteners, holes for fasteners, etc. that would penetrate roof 141. The one or more standoffs 239 transmit only a compressive load toward, and not a tensile load away from, the surface of the roof without penetrating the roof. The SS 200-A with solar panels 160 is preassembled off the roof for installation on the roof as a modular unit.

The main support (MS) 202-A includes a load-bearing member 210, and an interface member 212 has a face that mates with the apex of the roof, i.e., the inverted "V" shape that matches the inverted "V" shape of the apex of the roof. Additionally, interface member 212 is larger than the gap, or roof opening, 122 through which the LBM passes. Beneficially, the interface member 212 provides at least one of a pivot point for any torque loads from the equipment, a physical support of weight load of the equipment 160 and balance of support structure 200-A, and a weather shield for the hole in the roof. Only the portion of load-bearing member 210 located below interface member 212 extends beyond an imaginary plane formed by the interface member 212 in order to penetrate through the apex 116 of roof 141 into interior space 111 where SS 200-A will be attached to interior structure 110, i.e., SS 200-A will be attached to rafters in attic. The imaginary plane of the interface member 212, when installed on the building structure 100, is the roof surface 141 under each respective side of the interface member 212.

The MS 202-A additionally includes a counterbalance member 228, coupled to the LBM 210, for absorbing torque-loads generated by the equipment, e.g., wind load on solar panels 160. While counterbalance member 228 is capable of absorbing all torque loads of module 202-A, the present example, not part of the present invention, also includes a tie-down member 242 coupled to at least one support rail 240 and has a length that allows the tie-down member to be attached to the building structure 100-A at a location, e.g., overhang 112, that is outside of face 114-A of roof 141, such that face 114-A of roof 141 is not penetrated, thereby preserving the waterproof integrity of the face 114-A of roof 141. In one example, not part of the present invention, only a single tie-down 242 is required to retain a lower-end of the entire SS 200-A.

While power transmission from solar panels 160 is provided by traditional wiring 216-A, as shown in **Figure 2A****,** the present example, not part of the present invention, is well-suited to utilizing support rails 240 and main support 202 to conduct power to inverters, especially if module 200-A is operated at low-voltage, e.g., sub-50V in US, thereby making it a low-risk hazard. In this latter example, the plurality of rails, i.e. first rail 240-A and third rail 240-C (for an additional parallel module only partially shown) are selectively coupled to each other electrically, and to the renewable energy source (solar panels), according to polarity, i.e. positive (+), and are selectively coupled to at least one of the load-bearing members 210-B electrically, according to polarity, (+), in order to conduct current generated by a solar panel 160 to the building or to a grid. Similarly, a second rail 240-B is electrically coupled to a second polarity (-) of the renewable energy source, and physically coupled to a second LBM 210-A, which has the same polarity. Rails of one polarity, i.e., 240-A are electrically insulated from rails of a different polarity, i.e., 240-B and -C, both of which are coupled to electrical devices in interior 110 of building 100-A to provide isolation required by safety rules, and a less harsh interior setting allowing for less-expensive interior-rated electronics. The ultimate destination of the power is one or more electrical loads of a battery, a device in the building structure, and a grid, e.g., via optional power electronics housing 230-A, -B of **Figure 2A****,** where the power can be conditioned and the voltage boosted for DC or AC applications. Connections from solar panels 160 and power electronics in housing 230-A to rail 240 and LBM 210 can be made by welding pieces together, or by connecting support structure components with self-tapping fasteners, that cut a clean metal connection, and using rubber-sealed washers to provide a moisture proof sealing, which reduces corrosion and resistance buildup.

Referring now to Figure **1D****,** a front view of a building 100-D with an alternative single-slope roof architecture is shown having a preassembled support structure 200-D with solar panels 160 that pierces the roof only at the apex, not according to the present invention. Since the architecture of preassembled support structure 200-D is a single-slope without a mirror copy of the roof on the opposite side of the apex, there is an overhang 112-D1 on the lower part of roof 141 and an overhang 112-D2 on the upper part of roof 141, to which the support structure 200-D can be either tied down or attached without penetrating roof face 114-D, thus preserving roof integrity. Ridge shingles are not present in the present in the baseline roof of the present example, not part of the present invention, but then can be used to cover interface member 212. Consequently, a single preassembled module can still be utilized for installation as a single unit to save time and money in the present example. However, housing for battery and power electronics will use an exterior grade NEMA 4 rated exterior box.

Referring now to Figure **1E****,** a front view of a building structure 100-E is shown having a preassembled support structure and solar panel unit 200-E, located on both sides of a two-sided roof 142, 144, which pierces the roof 141 only at the apex 116, according to one or more embodiments. The present embodiment provides a more balanced solution, though it is most likely applied to an east-west oriented apex, providing a similar sun exposure on both sides 142, 144 of the roof. Optional gusset assembly 243 provides improved torque-absorbing capability and balance in the support structure 200-E. Optional battery basket 220 coupled to bottom of load-bearing member 202. All three factors of the gusset 243, battery ballast 220, and balanced modules 200-E enable the present configuration to eliminate a tie down of the lowest portion of the module 200-E The main support 202-E absorbs all of a torque load generated by the equipment on the SS in one embodiment. Thus, no tie-down is needed to retain a lower end of the SS 200-E.

Referring now to **Figure 2A****,** an oblique view of a preassembled main supports 202 is shown with integrated electronics module and battery module, which is installable as a single unit on a roof, according to one or more embodiments. Also shown are rails 240 and standoffs 239, coupled to main support 202, for supporting weight of solar panels 160 against roof 141 as shown in **Figure 1A****.** Main support (MS) 202 includes two load-bearing members 210, each having a first end, 210-A a second end 210-B, and an interface member 212 disposed between first end 210-A and second end 210-B, wherein interface member 212 has a face that mates with the apex of the roof, e.g., an inverted "V" and is larger than the gap 122 through which the second end 210-B of LBM 210, as shown in **Figures 1A-1C****.** MS 202 optionally includes a housing 230-A and 230-B, slated for storing at least one of a power electronics for solar panels 160, signal processing electronics for optional transceiver, and a battery, respectively, and coupled to second end 210-B of the LBM 210 and disposed below the imaginary plane created by each leg of the inverted "V" of the interface plate 212 such that housing 230-A, -B will be located below the roof 141 when installed in the building structure, as shown in **Figures 1A****,** **1D,** and 1E. Housing 230-A includes a battery that provides backup power for an electrical system of the building structure, an optional transceiver, or a power grid. Optional adapter mount 218 disposed on first end 210-A of LBM 210 is for receiving at least one transceiver, such as that shown in subsequent **Figure 2F****,** which will be disposed above apex 116 of the roof 141 in order to provide a line of sight for transceiving, e.g., in a mesh network.

Rail 240 and load bearing member 210 can be utilized as a conduit to route power and ground wires 216-A across the roof plane to an interior space 110 of building 100, as shown in **Figure 1A****.** Similarly, load bearing member 210 can be used as a conduit to route power, ground, and data lines 216-B from first end 210-A of LBM 210 to an interior space 110 of building 100, for access to power electronics and digital signal processing equipment disposed in housing 230-B. Power plug 219 can be used for supplement power, e.g., to optional transceiver device 270 of **Figure 2F****,** if coupled to main support 202.

As an example of the torque absorbing capabilities of main support 202, as applied to a building structure of **Figure 1A****,** if a force F1 is exerted on rail 240, such as a wind load during a storm, it creates a torque T1 that tries to lift the lower portion of support structure 200-A off a roof 141 . A balancing force F3 is applied to standoffs 239 of counterbalance members 228 at the roof 141 to create a counter-torque T2.

Referring now to **Figure 2B****,** a cross-section of a square-tube rail 258 is shown for supporting a solar panel in the support structure and for providing a conduit enclosure 260 for power and ground wires, according to one or more embodiments. Square-tube rail 258 has an internal cavity through which wires may be routed. This reduces installation materials for separate conduit, and labor spent to bend the conduit and affix it to the support structure. Similarly, in **Figure 2C****,** an oblique view of an angle-iron rail 254 is shown for supporting a solar panel in the support structure, including a conduit enclosure 256 for power and ground wires, according to one or more embodiments.

Referring now to **Figure 2D****,** a view of a standoff 222 for a composite shingle roof is shown, according to one or more embodiments. Standoff includes a flexible face piece 223 that interfaces with the composite shingle roof, e.g., roof 141 of **Figure 1A****.** Face piece can be any weather resistant material that offers elasticity and shock absorption while avoiding adhesion over time to composite shingles. Similarly, **Figure 2E** shows an oblique view of a standoff 222 with a wide base 224 and silicon pad 226 for low unit loading on a tile roof, according to one or more embodiments. A softer silicon material absorbs more loads without transmitting them to the clay roof tile, which may otherwise crack. Silicon pad 226 is grooved 225 in a downward direction 227 of roof, to allow flow of water there through and to provide breathing to avoid adhesion to the tile.

Referring now to **Figure 2F****,** an oblique view of a multiple transceiver attachment to the support structure is shown, according to one or more embodiments. Transceiver assembly 270 includes any one or more communication protocols, such as a cellular transceiver 274 coupled to the adapter mount 276 for providing a microcell station for local cellular communications. Another possible transceiver coupleable to the adapter mount of the SS is a high-frequency transceiver 272 for providing a short reach relay communication to another high-frequency transceiver in a mesh network in order to transmit data between the microcell stations and an edge router that is coupled to a switching office or server farm. By having transceiver assembly 270 located on ubiquitous solar installations, a natural mesh grid is available across a typical urban or suburban neighborhood, which is where bandwidth is in demand for wireless communications.

Referring now to **Figure 2G****,** an oblique view of a hinged interface member 212-G is shown, according to one or more embodiments. Hinged interface member 212-G flexibly adjusts the two flanges 212-A and 212-B to match a specific roof pitch within a wide range of possible roof pitches. Hinge pin 213 is threaded on one end with a capture bolt to provide a clamping of desired position. Alternatively, hinged interface member 212-G can be welded during preassembly for a known roof pitch or welded in the field for an unknown roof pitch. Cutout 215 is oversized to accommodate steep roof pitches that require a longer cutout, as compared to a shallow pitch roof that requires a smaller cutout. A rubber grommet can also be provided around LBM 210 to fill any gaps with cutout 215 in interface member 212. Pin 213 can be threaded through LBM 210 to offer further retention of LBM 210 on building structure 100-A.

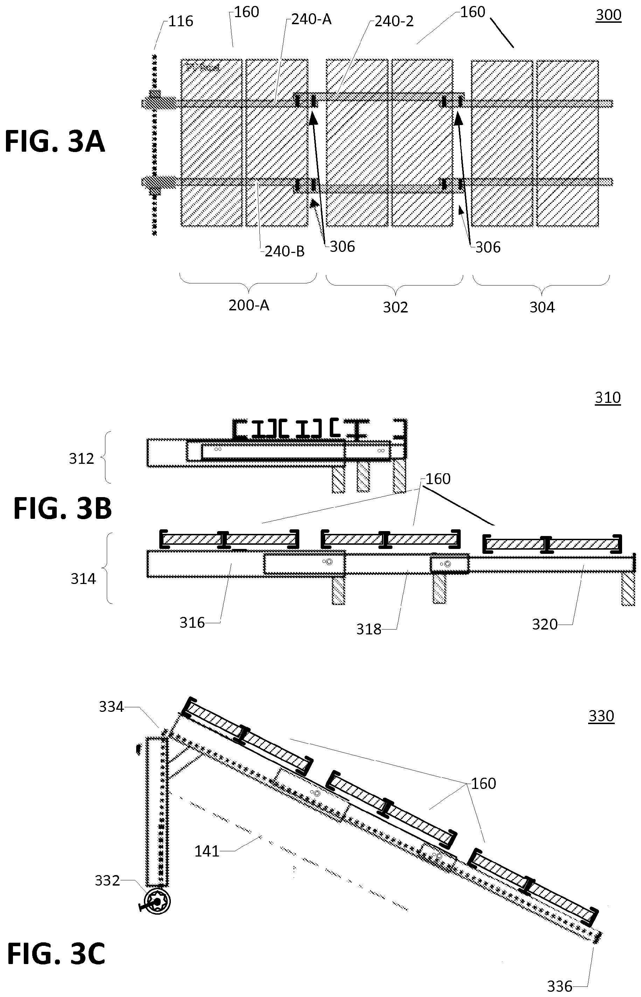

Referring now to **Figure 3A****,** a top view of a cascaded PV panel module 300 down an extended-height roof is shown, according to one or more examples, not part of the present invention. A typical module 200-A of PV panels 160 is similar to that shown in **Figure 1A****.** However, in the present example, additional sets of panels 302 and 304 are coupled serially down a roof of a building structure, with rails 240-A and 240-B coupled to respective rails in subsequent modules via fastening means 306. A serial arrangement as shown would require a tie down on the end of panel set 304 furthest from apex 116. This example would require some on-roof assembly due to the length of the module

Referring now to **Figure 3B****,** a side view of a telescoping support rail system 310 is shown, according to one or more embodiments. View 312 illustrates a closed, or retracted, position of the telescoping rails 316, 318, 320 while view 314 illustrates an expanded or deployed position of the telescoping rails. 316, 318, 320, with installed solar panels 160, each of which is slightly larger than the one nesting within it. This embodiment allows for more compact storage and shipment of solar systems having more solar panels in a module than provided in **Figure 3A****.** Telescoping rails can have a series of holes that allows for some flexibility in length for different roof sizes. Fasteners lock the telescoping rails into their final position for deployment.

Referring now to **Figure 3C****,** a side view of a cable-tensioned telescoping support rail system 330 is shown, according to one or more embodiments. Cable 334 is fixed at end 336, retractable by reel 332 for storage and shipment of module 330. Once telescoping rails 316, 318, and 320 are extended and fastened to their proper length, a tension can be placed on the assembly via cable 334 to ensure rigidity and integrity.

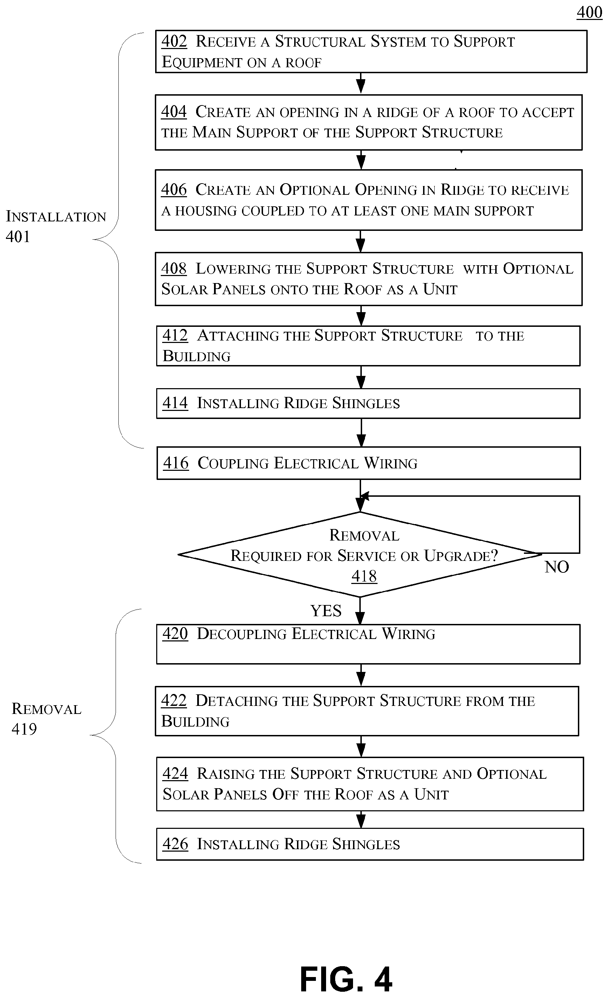

Referring now to **Figure 4****,** a flowchart 400 of a method to install and remove a modular PV support structure is shown, according to one or more embodiments. Flowchart 400 is described herein as implemented on exemplary support structure 200 on building structure 100-A of **Figures 1A-1C****,** unless noted otherwise, including the alternative embodiments described herein.

Operations 4902 through 416 provide for installation procedure 401. In operation 402, a support structure 200-A is received for supporting equipment, notably PV solar panels 160, on a roof 141 of building structure 100-A. Structural system 200-A is received as a modular unit, e.g., delivered by flatbed truck at the work site, with solar panels 160 installed, and optional battery and power electronics housing 230-A and -B of **Figure 2A****,** already installed and wired. Sensitive optional equipment, such as transceiver assembly 270, can be installed in situ, on the roof, after support structure 200 is secured in order to avoid damage. Because support structure 200 is preassembled, including pre-wiring, installation on building 100-A is greatly simplified, thereby saving time and money.

Operation 404 requires the creation of an opening in a ridge of a roof to accept the main support of the structural system. The first sub step is to remove the ridge shingles/ tile 119 to get access to the wood panel sheets thereunder. On a new house, the plywood base of the roof can be cut short, thereby leaving a gap, or opening, 122 at the apex 116 of the roof 141 to receive the portion, e.g., 210-B end of load-bearing member, of the support structure 200 that penetrates the plane of the roof 141 to be disposed in the interior space 111, e.g, an attic. Many houses already have this gap 122 at the apex 116, for installation of a ridge vent. In this case, the sheet metal or plastic ridge vent can be cut out to create the necessary gap. In operation 406, an optional opening in apex, or ridge, 116, is created to accommodate housings 230-A, -B of **Figure** 2A for the battery and power electronics.

Turning to operation 408, the preassembled modular support structure 200 is lowered onto the roof, without upper and lower cross braces 226-B, -A attached. A semi-skilled worker can make the installation single-handedly if she is qualified for low-voltage wiring, and if the boom lift used to raise and lower the support structure 200 is remotely operable. Support structure 200 is lifted by lift hooks / hoop flanges installed on the support structure, or by a webbed strap under the structure, and the second end 210-B, with associated housings 230-A, -B, is then threaded through the opening 122 in apex 116 into the interior space 111 of building structure 100-A. The support structure is seated when the interface member 212 and standoffs 239 naturally come to rest against the roof 141. At this point, there is no need to fasten the support structure to the roof to prevent it from sliding down the roof, because the load-bearing member 210 is sufficiently strong to retain the base weight of the support structure 200, save a condition of unusually strong winds.

In operation 412, with the boom harness still attached, the installer can secure support structure 200 to building structure 110 by installing cross-brace 226-A, -B in the interior 111 space, either by threaded lug bolts or by clamping mechanism. Because the load-bearing member 210 is installed adjacent to the rafter, the interface member 212 loads down on the plywood as well as on the rafter, thereby providing structural integrity. An alternative cross brace could capture a bottom-side of a rafter thereby placing the height of the rafter in compression while pulling down on load-bearing member 210 in tension, thereby ensuring a preloaded main support 202. Optional tie-downs 242 can also be attached in this step, especially for support structures that are lengthy, e.g., more than two panels. For two-panel support structures 200, the cross-bracing and optional counter member

In operation 414, ridge shingles are installed. The ridge shingle 119 is the easiest and least risky shingle to replace on the roof because they are easily replaced, and they do not disturb any adjacent shingles. In fact, a carefully removed ridge shingle can be reused after the support structure is installed, thus guaranteeing shingle color matching and reducing cost. In comparison, replacing shingles midway down a roof if needed in a traditional solar system installation does disturb adjacent shingles, especially those layered over the shingle of interest, with a frequent side effect of leaking.

In operation 416, electrical wiring is coupled, both for the solar panel electrical generation, i.e., 216-A, as well as wires 216-B for transceiver operation. Optional AC building power is provided via outlet 219. Power electronics in housing 230-B can provide maximum power-point tracking (MPPT) on a per-module basis, e.g., for the two solar panels 160 shown. Additional modules installed side-by-side on roof 141 provides parallel sources of power, each with its own micro-inverter and MPPT module. In this manner, troubleshooting for a failed or underperforming solar system is easily accomplished. Furthermore, if wired in parallel, oversized micro-inverters from a set of solar panels on support structure 200 can absorb current from an adjacent set of solar panels that has failed. A serial arrangement of PV solar modules is also usable with the present disclosure.

Operation 418 inquires whether a support structure and attached solar panels needs to be serviced or upgraded. As mentioned, with a parallel and per-module electronics system, a failed or underperforming module is easier to detect. If no removal is needed, then the solar system remains operational.

Operations 420 through 426 provide for removal procedure 419. If a failed module is identified, or is desired for upgrade, then in operation 420, the electrical wiring is decoupled, and in operation 422, the support structure 200 is detached from the building 100-A. This step includes removal of the ridge shingles 119, and sensitive equipment, e.g. optional transceiver assembly 270.

In operation 424, support structure 200 is raised off roof 141, e.g. by a boom lift, and placed on transportation away from the work site. Presumably, a replacement module is available for installation afterwards, via operations 402 to 416. Regardless, ridge shingles that were removed in operation 422 are now reinstalled to provide sealing integrity of the roof.

By using method 400, the installation and removal of solar systems is accomplished quickly and efficiently. This has the benefit of proliferating usage of PV and thermal solar usage, with the associated environmental benefits.

### Alternative Embodiments

While the present disclosure focuses on PV solar modules, the present invention is well suited to any type of equipment mounting, including thermal solar, air-conditioning, etc. Methods and operations described herein can be in different sequences than the exemplary ones described herein, e.g., in a different order. Thus, one or more additional new operations may be inserted within the existing operations or one or more operations may be abbreviated or eliminated, according to a given application, so long as substantially the same function, way and result is obtained

Although the present embodiments have been described with reference to specific example embodiments, it will be evident that various modifications and changes may be made to these embodiments.

The foregoing descriptions of specific embodiments of the present disclosure have been presented for purposes of illustration and description. They are not intended to be exhaustive or to limit the invention to the precise forms disclosed. Many modifications and variations are possible in light of the above teaching without departing from the scope of the various embodiments. The embodiments were chosen and described in order to explain the principles of the invention and its practical application best, to enable others skilled in the art to best utilize the invention and various embodiments with various modifications as are suited to the particular use contemplated. The claims define the matter for protection

## Claims

1. A system comprising a roof (141) of a building structure and a support structure (200-A) for mounting equipment on the roof (141), the support structure (200-A) comprising:
at least one support rail (240), for supporting the equipment;
one or more standoffs (239), coupled to the at least one support rail, for maintaining the equipment away from the roof (141); and wherein:
the support structure (200-A) is preassembled off the roof (141) for installation on the roof (141) as a single unit; no tie-down is present to retain a lower end of the support structure (200-A); and
the support structure (200-A) penetrates the roof (141) of the building structure (100-E) only at an apex of the roof (141), the support structure further comprising: a main support (200) comprising: a load-bearing member (210) having a first end (210-A), a second end (210-B), and an interface member (212) disposed between the first end (210-A) and the second end (210-B), wherein the interface member (212) has a face that mates with an apex of the roof (141), and wherein the interface member (212) is larger than a hole or a gap in the apex of the roof (141) through which the second end (210-B) of the load-bearing member (210) passes; the interface member (212) provides at least one of a pivot point for any torque loads from the equipment, a physical support of a weight load of the equipment, and a weather shield for the gap in the apex; and only the second end of the load-bearing member (210) extends beyond an imaginary plane formed by the interface member (212) in order to penetrate the apex of the roof (141) on which the support structure is installed.

2. The system of claim 1, wherein:
the interface member (212) is an inverted V shape that comprises a same angle for both halves of the interface member (212) that mates with a shape of the apex, in order to provide at least one of a pivot point, a physical support, and a weather shield.

3. The system of claim 1, further comprising:
a counterbalance member (228) coupled to the load-bearing member (210), the counterbalance member (228) for bearing a torque-load generated by the equipment.

4. The system of claim 1, further comprising:
an adapter mount (218) for receiving at least one transceiver, including at least one antenna, wherein:
the adapter mount (218) is disposed towards the first end (210-A) of the load bearing member (210) such that the transceiver will be disposed above the apex of the roof (141) in order to provide a line of sight path for transceiving, and optionally further comprising:
a cellular transceiver coupled to the adapter mount (218), for providing a microcell station for local cellular communications;
a high-frequency transceiver coupled to the adapter mount (218), for providing a short reach relay communication to another high-frequency transceiver in a mesh network in order to transmit data between the microcell station and an edge router that is coupled to a switching office or a server; and
coupling means disposed on the load bearing member (210) to receive an electronic-components housing (230-A, 230-B),
wherein:
the electronic-components housing (230-A, 230-B) includes electronics to operate the at least one antenna; and
the electronic-components housing (230-A, 230-B) is installable as an assembly simultaneously with the load_bearing member (210) through the gap in the apex of the roof (141).

5. The system of claim 1, further comprising:
an electronic-components housing (230-A, 230-B), wherein:
the electronic-components housing (230-A, 230-B) includes electronics to operate at least one of the equipment on the roof (141), and a transceiver; and
the electronic-components housing (230A-, 230-B) has a weather rating of indoor or outdoor, and optionally wherein:
the electronic-components housing (230-A, 230-B) is affixed to the load bearing member (210) as a single assembly for installation through a single gap in the apex of the roof (141) into a protected space of the building structure (100-E) that is protected by the roof (141).

6. The system of claim 3 wherein:
the counterbalance member is disposed on the roof surface without penetrating the roof (141); and
the counterbalance member includes a standoff (139) disposed against the roof, wherein the standoff transmits compressive loads to the roof surface.

7. The system of claim 1, wherein:
the load bearing member (210) has a tubular cross section with an interior cavity (260) through which wiring may be routed.

8. The system of claim 1, wherein:
the one or more standoffs (239) have no retention feature to couple them to the roof of the building structure; and
the one or more standoffs (239) transmit only a compressive load toward the surface of the roof without penetrating the roof.

9. The system of claim 1, further comprising:
one or more solar panels coupled to the at least one support rail (240); and wherein:
the support structure (200-A) is a preassembled unit with the solar panels for installation on the roof (141) as a modular unit.

10. A method of installing a support structure for mounting equipment on a roof of a building structure, the method comprising:
preassembling the support structure (200-A) off the roof (141) to create a preassembled structural system,
wherein:
the support structure (200-A) includes at least one main support (202) and at least one standoff (239); and
the main support (202) comprises a load bearing member (210) having a first end (210-A) and a second end (210-B) and an interface member (212) disposed therebetween; creating an opening in a ridge of the roof (141) to accept the at least one main support (202) of the preassembled structural system; and
lowering the preassembled support structure (200-A) onto the roof (141), wherein the support structur (200-A) penetrates the roof (141) only at an apex at the ridgeline and is supported on the roof (141) by the at least one standoff (239), wherein only the second end (210-B) of the load bearing member (210) of the support structure (200-A) penetrates the roof (141); and at least one standoff (239) coupled to the support structure (200-A) transmits a compressive load of the support structure (200-A) and the solar panels to the roof (141) but does not transmit a tensile load to the roof (141).

11. The method of claim 10 further comprising:
attaching the support structure (200-A) to a support structure that supports the roof (141); and
tying down an end of the support structure (200-A) disposed furthest from the apex of the roof (141) to the building structure.

12. The method of claim 10 further comprising:
removing ridge shingles or tiles from the roof (141);
installing the structural system;
creating a cutout in the ridge shingles or tiles for the main support (202) disposed at the ridgeline;
installing the ridge shingles or tiles around the main support (202); and
caulking around an interface between the main support (202) and the cutout in the ridge shingles or tiles.

13. The method of claim 10 further comprising: installing solar panels on the support structure (200-A). prior to the lowering operation.

## Patentansprüche

1. System, umfassend ein Dach (141) einer Gebäudestruktur und eine Stützstruktur (200-A) zum Montieren von Ausrüstung auf dem Dach (141), wobei die Stützstruktur (200-A) Folgendes umfasst:
mindestens eine Stützschiene (240) zum Stützen der Ausrüstung;
einen oder mehrere Abstandshalter (239), die mit der mindestens einen Stützschiene gekoppelt sind, um die Ausrüstung von dem Dach (141) entfernt zu halten; und wobei:
die Stützstruktur (200-A) für Installation auf dem Dach (141) als eine einzelne Einheit außerhalb des Dachs (141) vorzusammengebaut ist;
keine Verankerung vorhanden ist, um ein unteres Ende der Stützstruktur (200-A) festzuhalten; und
die Stützstruktur (200-A) das Dach (141) der Gebäudestruktur (100-E) nur an einer Spitze des Dachs (141) durchdringt, wobei die Stützstruktur ferner Folgendes umfasst: eine Hauptstütze (200), die Folgendes umfasst: ein lasttragendes Element (210), das ein erstes Ende (210-A), ein zweites Ende (210-B) und ein Schnittstellenelement (212) aufweist, das zwischen dem ersten Ende (210-A) und dem zweiten Ende (210-B) angeordnet ist, wobei das Schnittstellenelement (212) eine Fläche aufweist, die mit einer Spitze des Dachs (141) zusammenpasst, und wobei das Schnittstellenelement (212) größer als ein Loch oder ein Spalt in der Spitze des Dachs (141) ist, durch das/den das zweite Ende (210-B) des lasttragenden Elements (210) verläuft; das Schnittstellenelement (212) mindestens eines von einem Lagerpunkt für beliebige Drehmomentlasten von der Ausrüstung, einer physischen Stütze einer Gewichtslast der Ausrüstung und einem Wetterschutz für den Spalt in der Spitze bereitstellt; und nur das zweite Ende des lasttragenden Elements (210) sich über eine durch das Schnittstellenelement (212) gebildete imaginäre Ebene hinaus erstreckt, um die Spitze des Dachs (141), auf dem die Stützstruktur installiert ist, zu durchdringen.

2. System nach Anspruch 1, wobei:
das Schnittstellenelement (212) eine umgekehrte V-Form ist, die einen gleichen Winkel für beide Hälften des Schnittstellenelements (212) umfasst, der mit einer Form der Spitze zusammenpasst, um mindestens eines von einem Lagerpunkt, einer physischen Stütze und einem Wetterschutz bereitzustellen.

3. System nach Anspruch 1, ferner umfassend:
ein Ausgleichselement (228), das mit dem lasttragenden Element (210) gekoppelt ist, wobei das Ausgleichselement (228) dazu dient, eine durch die Ausrüstung erzeugte Drehmomentlast zu tragen.

4. System nach Anspruch 1, ferner umfassend:
eine Adapterhalterung (218) zum Aufnehmen mindestens eines Sendeempfängers, der mindestens eine Antenne enthält, wobei:
die Adapterhalterung (218) in Richtung des ersten Endes (210-A) des lasttragenden Elements (210) angeordnet ist, sodass der Sendeempfänger über der Spitze des Dachs (141) angeordnet ist, um eine Strecke mit optischer Sicht zum Senden/Empfangen bereitzustellen,
und optional ferner umfassend:
einen Mobilfunk-Sendeempfänger, der mit der Adapterhalterung (218) gekoppelt ist, zum Bereitstellen einer Mikrozellenstation für lokale Mobilfunkkommunikation;
einen Hochfrequenz-Sendeempfänger, der an die Adapterhalterung (218) gekoppelt ist, um eine Relaiskommunikation mit kurzer Reichweite zu einem anderen Hochfrequenz-Sendeempfänger in einem Mesh-Netzwerk bereitzustellen, um Daten zwischen der Mikrozellenstation und einem Edge-Router, der an eine Vermittlungsstelle oder einen Server gekoppelt ist, zu übertragen; und
Kopplungsmittel, die an dem lasttragenden Element (210) angeordnet sind, um ein Elektronikkomponentengehäuse (230-A, 230-B) aufzunehmen,
wobei:
das Elektronikkomponentengehäuse (230-A, 230-B) Elektronik enthält, um die mindestens eine Antenne zu betreiben; und
das Elektronikkomponentengehäuse (230-A, 230-B) als eine Baugruppe gleichzeitig mit dem lasttragenden Element (210) durch den Spalt in der Spitze des Dachs (141) installierbar ist.

5. System nach Anspruch 1, ferner umfassend:
ein Elektronikkomponentengehäuse (230-A, 230-B), wobei:
das Elektronikkomponentengehäuse (230-A, 230-B) Elektronik enthält, um mindestens eines von der Ausrüstung auf dem Dach (141) und einem Sendeempfänger zu betreiben; und
das Elektronikkomponentengehäuse (230-A, 230-B) eine Witterungsbeständigkeit für innen oder außen aufweist,
und wobei optional:
das Elektronikkomponentengehäuse (230-A, 230-B) als eine einzige Baugruppe an dem lasttragenden Element (210) zur Installation durch einen einzigen Spalt in der Spitze des Dachs (141) in einen geschützten Raum der Gebäudestruktur (100-E), der durch das Dach (141) geschützt ist, befestigt ist.

6. System nach Anspruch 3, wobei:
das Ausgleichselement auf der Dachoberfläche angeordnet ist, ohne das Dach (141) zu durchdringen; und
das Ausgleichselement einen Abstandshalter (139) enthält, der an dem Dach angeordnet ist, wobei der Abstandshalter Drucklasten auf die Dachoberfläche überträgt.

7. System nach Anspruch 1, wobei:
das lasttragende Element (210) einen rohrförmigen Querschnitt mit einem inneren Hohlraum (260) aufweist, durch den eine Verdrahtung geführt werden kann.

8. System nach Anspruch 1, wobei:
der eine oder die mehreren Abstandshalter (239) kein Rückhaltemerkmal aufweisen, um sie mit dem Dach der Gebäudestruktur zu koppeln; und
der eine oder die mehreren Abstandshalter (239) nur eine Drucklast in Richtung der Oberfläche des Dachs übertragen, ohne das Dach zu durchdringen.

9. System nach Anspruch 1, ferner umfassend:
ein oder mehrere Solarpaneele, die mit der mindestens einen Stützschiene (240) gekoppelt sind;
und wobei:
die Stützstruktur (200-A) eine vorzusammengebaute Einheit mit den Solarpaneelen für Installation auf dem Dach (141) als eine modulare Einheit ist.

10. Verfahren zum Installieren einer Stützstruktur zum Montieren von Ausrüstung auf einem Dach einer Gebäudestruktur, wobei das Verfahren Folgendes umfasst:
Vorzusammenbauen der Stützstruktur (200-A) außerhalb des Dachs (141), um ein vorzusammengebautes Struktursystem zu schaffen,
wobei:
die Stützstruktur (200-A) mindestens eine Hauptstütze (202) und mindestens einen Abstandshalter (239) enthält; und
die Hauptstütze (202) ein lasttragendes Element (210) umfasst, das ein erstes Ende (210-A) und ein zweites Ende (210-B) und ein Schnittstellenelement (212), das dazwischen angeordnet ist, aufweist; Schaffen einer Öffnung in einem First des Dachs (141), um die mindestens eine Hauptstütze (202) des vorzusammengebauten Struktursystems entgegenzunehmen; und
Absenken der vorzusammengebauten Stützstruktur (200-A) auf das Dach (141), wobei die Stützstruktur (200-A) das Dach (141) nur an einer Spitze an der Firstlinie durchdringt und durch den mindestens einen Abstandshalter (239) auf dem Dach (141) gestützt wird, wobei nur das zweite Ende (210-B) des lasttragenden Elements (210) der Stützstruktur (200-A) das Dach (141) durchdringt; und mindestens ein Abstandshalter (239), der an die Stützstruktur (200-A) gekoppelt ist, eine Drucklast der Stützstruktur (200-A) und der Solarpaneele auf das Dach (141) überträgt, aber keine Zuglast auf das Dach (141) überträgt.

11. Verfahren nach Anspruch 10, ferner umfassend:
Anbringen der Stützstruktur (200-A) an einer Stützstruktur, die das Dach (141) stützt; und
Verankern eines Endes der Stützstruktur (200-A), das am weitesten von der Spitze des Dachs (141) entfernt ist, an der Gebäudestruktur.

12. Verfahren nach Anspruch 10, ferner umfassend:
Entfernen von Firstschindeln oder -ziegeln vom Dach (141);
Installieren des Struktursystems;
Schaffen eines Ausschnitts in den Firstschindeln oder -ziegeln für die Hauptstütze (202), die an der Firstlinie angeordnet ist;
Installieren der Firstschindeln oder -ziegel um die Hauptstütze (202); und
Abdichten um eine Schnittstelle zwischen der Hauptstütze (202) und dem Ausschnitt in den Firstschindeln oder -ziegeln.

13. Verfahren nach Anspruch 10, ferner umfassend:
Installieren von Solarpaneelen auf der Stützstruktur (200-A) vor dem Vorgang des Absenkens.

## Revendications

1. Système comprenant un toit (141) d'une structure de bâtiment et une structure de support (200-A) pour monter un équipement sur le toit (141), la structure de support (200-A) comprenant :
au moins un rail de support (240), pour supporter l'équipement ;
une ou plusieurs entretoises (239), couplées à l'au moins un rail de support, pour maintenir l'équipement à l'écart du toit (141) ; et dans lequel :
la structure de support (200-A) est préassemblée hors du toit (141) pour être installée sur le toit (141) sous la forme d'une unité unique ;
aucun dispositif de retenue n'est présent pour retenir une extrémité inférieure de la structure de support (200-A) ; et
la structure de support (200-A) pénètre dans le toit (141) de la structure de bâtiment (100-E) uniquement au niveau d'un sommet du toit (141), la structure de support comprenant en outre : un support principal (200) comprenant : un élément porteur (210) présentant une première extrémité (210-A), une seconde extrémité (210-B), et un élément d'interface (212) disposé entre la première extrémité (210-A) et la seconde extrémité (210-B), dans lequel l'élément d'interface (212) présente une face qui s'accouple à un sommet du toit (141), et dans lequel l'élément d'interface (212) est plus grand qu'un trou ou qu'un espace dans le sommet du toit (141) à travers lequel passe la seconde extrémité (210-B) de l'élément porteur (210) ; l'élément d'interface (212) fournit au moins un parmi un point de pivot pour toute charge de couple provenant de l'équipement, un support physique d'une charge de poids de l'équipement, et un bouclier contre les intempéries pour l'espace dans le sommet ; et seule la seconde extrémité de l'élément porteur de charge (210) s'étend au-delà d'un plan imaginaire formé par l'élément d'interface (212) afin de pénétrer dans le sommet du toit (141) sur lequel la structure de support est installée.

2. Système de la revendication 1, dans lequel :
l'élément d'interface (212) est une forme en V inversé qui comprend un même angle pour les deux moitiés de l'élément d'interface (212) qui s'accouple à une forme du sommet, afin de fournir au moins un parmi un point de pivot, un support physique et un bouclier contre les intempéries.

3. Système de la revendication 1, comprenant en outre :
un élément de contrepoids (228) couplé à l'élément porteur (210), l'élément de contrepoids (228) destiné à supporter une charge de couple générée par l'équipement.

4. Système de la revendication 1, comprenant en outre :
une monture adaptatrice (218) destinée à recevoir au moins un émetteur-récepteur, comprenant au moins une antenne, dans lequel :
la monture adaptatrice (218) est disposée vers la première extrémité (210-A) de l'élément porteur (210) de sorte que l'émetteur-récepteur sera disposé au-dessus du sommet du toit (141) afin de fournir une trajectoire de ligne de visée pour l'émission-réception, et comprenant en outre éventuellement :
un émetteur-récepteur cellulaire couplé à la monture adaptatrice (218),
destiné à fournir une station de microcellulaire pour des communications cellulaires locales ;
un émetteur-récepteur haute fréquence couplé à la monture adaptatrice (218), destiné à fournir une communication de relais à courte portée à un autre émetteur-récepteur haute fréquence dans un réseau maillé afin de transmettre des données entre la station microcellulaire et un routeur de bord qui est couplé à un centre de commutation ou à un serveur ; et
des moyens de couplage disposés sur l'élément porteur (210) pour recevoir un boîtier de composants électroniques (230-A, 230-B), dans lequel :
le boîtier de composants électroniques (230-A, 230-B) comprend des composants électroniques pour faire fonctionner l'au moins une antenne ; et
le boîtier de composants électroniques (230-A, 230-B) peut être installé en tant qu'assemblage simultanément avec l'élément porteur de charge (210) à travers l'espace dans le sommet du toit (141).

5. Système de la revendication 1, comprenant en outre :
un boîtier de composants électroniques (230-A, 230-B), dans lequel :
le boîtier de composants électroniques (230-A, 230-B) comprend des composants électroniques pour faire fonctionner au moins l'un des équipements sur le toit (141), et un émetteur-récepteur ; et
le boîtier de composants électroniques (230-A, 230-B) présente une résistance aux intempéries pour l'intérieur ou l'extérieur, et éventuellement dans lequel :
le boîtier de composants électroniques (230-A, 230-B) est fixé à l'élément porteur de charge (210) en tant qu'assemblage unique pour une installation à travers un espace unique dans le sommet du toit (141) dans un espace protégé de la structure de bâtiment (100-E) qui est protégé par le toit (141).

6. Système de la revendication 3, dans lequel :
l'élément de contrepoids est disposé sur la surface du toit sans pénétrer dans le toit (141) ; et
l'élément de contrepoids comprend une entretoise (139) disposée contre le toit, dans lequel l'entretoise transmet des charges de compression à la surface du toit.

7. Système de la revendication 1, dans lequel :
l'élément porteur de charge (210) présente une section transversale tubulaire avec une cavité intérieure (260) à travers laquelle un câblage peut être acheminé.

8. Système de la revendication 1, dans lequel :
les une ou plusieurs entretoises (239) ne présentent aucune caractéristique de retenue pour les coupler au toit de la structure de bâtiment ; et
les une ou plusieurs les entretoises (239) transmettent uniquement une charge de compression vers la surface du toit sans pénétrer dans le toit.

9. Système de la revendication 1, comprenant en outre :
un ou plusieurs panneaux solaires couplés à l'au moins un rail de support (240) ; et dans lequel :
la structure de support : (200-A) est une unité préassemblée avec les panneaux solaires destinée à être installée sur le toit (141) sous la forme d'une unité modulaire.

10. Procédé d'installation d'une structure de support pour monter un équipement sur un toit d'une structure de bâtiment, le procédé comprenant :
le préassemblage de la structure de support (200-A) hors du toit (141) pour créer un système structurel préassemblé,
dans lequel :
la structure de support (200-A) comprend au moins un support principal (202) et au moins une entretoise (239) ; et
le support principal (202) comprend un élément porteur (210) présentant une première extrémité (210-A) et une seconde extrémité (210-B) et un élément d'interface (212) disposé entre celles-ci ; créant une ouverture dans une faîte du toit (141) pour recevoir l'au moins un support principal (202) du système structurel préassemblé ; et
l'abaissement de la structure de support préassemblée (200-A) sur le toit (141), dans lequel la structure de support (200-A) pénètre dans le toit (141) uniquement au niveau d'un sommet au niveau de la ligne de faîte et est supportée sur le toit (141) par l'au moins une entretoise (239), dans lequel seule la seconde extrémité (210-B) de l'élément porteur (210) de la structure de support (200-A) pénètre dans le toit (141) ; et au moins une entretoise (239) couplée à la structure de support (200-A) transmet une charge de compression de la structure de support (200-A) et des panneaux solaires au toit (141) mais ne transmet aucune charge de traction au toit (141).

11. Procédé de la revendication 10, comprenant en outre :
la fixation de la structure de support (200-A) à une structure de support qui supporte le toit (141) ; et
l'attache d'une extrémité de la structure de support (200-A) disposée le plus loin du sommet du toit (141) à la structure de bâtiment.

12. Procédé de la revendication 10, comprenant en outre :
le retrait de bardeaux ou de tuiles de faîte du toit (141) ;
l'installation du système structurel ;
la création d'une découpe dans les bardeaux ou les tuiles de faîte pour le support principal (202) disposé au niveau de la ligne de faîte ;
l'installation des bardeaux ou des tuiles de faîte autour du support principal (202) ; et
le calfeutrage autour d'une interface entre le support principal (202) et la découpe dans les bardeaux ou les tuiles de faîte.

13. Procédé de la revendication 10, comprenant en outre :
l'installation de panneaux solaires sur la structure de support (200-A) avant l'opération d'abaissement.
